# EUROPEAN PATENT APPLICATION

(11) **EP 4 429 178 A1**
(43) Date of publication of application: **11.09.2024**
(21) Application number: 22918998.0
(22) Date of filing: 11.11.2022
(51) Int. Cl.: H04L 12/28, H04L 67/125, G06F 3/0484

(54) **DEVICE AND METHOD FOR PROVIDING USER INTERFACE FOR CONTROLLING REGISTERED EXTERNAL DEVICE**

(30) Priority: 04.01.2022 KR 20220000688
(71) Applicant: Samsung Electronics Co., Ltd., Suwon-si, Gyeonggi-do 16677 (KR)
(72) Inventor: KIM, Byuksun, Suwon-si, Gyeonggi-do 16677 (KR); KIM, Dongwook, Suwon-si, Gyeonggi-do 16677 (KR)
(74) Representative: Gulde & Partner
(86) International application number: PCT/KR2022/017810
(87) International publication number: WO 2023/132461

(57) **Abstract**

This document relates to an electronic device and method for providing a user interface for controlling a registered external device. The electronic device: establishes a communication connection with a mobile electronic device; scans external devices connectable through wireless communication; when a topographical map generated by scanning while the mobile electronic device is moving and information about the scanned external devices are received, matches external devices scanned by the mobile electronic device with the external devices connectable through the wireless communication; registers external devices for which matching was successful; and displays, on a screen, a list of the registered external devices and a user interface for controlling each of the registered external devices.

## Description

### Technical Field

The following embodiments relate to a technology for displaying a registered external device on a screen and providing a user interface (UI) for controlling the external device around the external device displayed on the screen.

### Background Art

Various devices such as the Internet of Things (IoT), infrared rays (IR) devices, home appliances, and Bluetooth (BT) devices in the home are used at an increasing rate. In general, such multiple devices may also be connected to a single access point (AP) to be used.

In general, it may not be easy for users to manually set up all devices when using them, and there is thus a growing tendency to set them up automatically.

When using a set-top, a Blu-ray disc (BD), or a soundbar by connecting in a wired manner through a high-definition multimedia interface (HDMI) cable or optical cable, an image display device may receive image signal and device signal information through the HDMI cable and automatically recognize them. However, for home appliances that are not connected through a cable, determining device information and automatically setting devices such that they are compatible with a display for each device has not yet satisfied consumers.

A user may open a mobile camera through mobile recognition and move to set up devices one by one, which may cause inconvenience to the user.

### Detailed Description of Invention

### Technical Solutions

According to an embodiment disclosed herein, a mobile electronic device may be used to register external devices (or home appliances) present in the home and output a topographic map indicating thereon locations of the registered external devices, and a user interface (UI) may be provided to control an external device around the external device displayed on a screen.

In addition, according to various embodiments, using the mobile electronic device may control the registered external devices.

According to an embodiment, there is provided a method of providing a UI for controlling registered external devices by an electronic device, the method including: performing a communication connection with a mobile electronic device; scanning for external devices connectable through wireless communication; receiving a topographical map generated by the mobile electronic device through scanning while moving and information about scanned external devices; matching the external devices scanned by the mobile electronic device and the external devices connectable through the wireless communication; registering matched external devices for which the matching is successful; and outputting a list of the registered external devices and a UI to control the registered external devices, respectively, on a screen.

According to an embodiment, there is provided an electronic device including: a communication unit configured to scan or communicate with external devices connectable through wireless communication and establish communication with a mobile electronic device; a display unit configured to output, on a screen, a list of registered external devices and a UI to control the registered external devices, respectively; and a processor configured to: control the communication unit to perform a communication connection with the mobile electronic device and scan the external devices connectable through the wireless communication; when receiving a topographic map generated by the mobile electronic device through scanning while moving and information about scanned external devices, match the external devices scanned by the mobile electronic device and the external devices connectable through the wireless communication; register matched external devices for which the matching is successful; and control the display unit to output a list of the registered external devices and a UI to control the registered external devices, respectively.

### Effects

The present disclosure relates to an electronic device that may establish a communication connection with a mobile electronic device; scan external devices connectable through wireless communication; when receiving a topography generated by the mobile electronic device through scanning while moving and information about scanned external devices, match the external devices scanned by the mobile electronic device and the external devices connectable through the wireless communication; register successfully matched external devices; and output, on a screen, a list of the registered external devices and a user interface (UI) controlling each of the registered external devices, and the electronic device may thus recommend convenient functions to a user by registering a plurality of external devices (or home appliances) and providing a UI for each of the registered external devices after the registration.

### Brief Description of Drawings

FIG. 1 is a diagram schematically illustrating a configuration of a system for providing a user interface (UI) controlling registered external devices according to an embodiment.
FIG. 2 is a flowchart illustrating an example of a process performed by an electronic device to register external devices and output and control a UI controlling the registered external devices, using a mobile electronic device, according to an embodiment.
FIG. 3 is a flowchart illustrating another example of a process performed by an electronic device to register external devices and output and control a UI controlling the registered external devices, using a mobile electronic device, according to an embodiment.
FIG. 4 is a flowchart illustrating an example of a process performed by an electronic device to match external devices connectable through wireless communication and external devices scanned by a mobile electronic device, according to an embodiment.
FIG. 5 is a diagram illustrating an example of a screen outputting a UI on an electronic device according to an embodiment.
FIG. 6 is a diagram illustrating another example of a screen outputting a UI on an electronic device according to an embodiment.
FIG. 7 is a diagram illustrating still another example of a screen outputting a UI on an electronic device according to an embodiment.
FIG. 8 is a block diagram illustrating a configuration of an electronic device according to an embodiment.
FIG. 9 is a detailed block diagram illustrating a configuration of an electronic device according to an embodiment.
FIG. 10 is a block diagram illustrating a configuration of a mobile electronic device according to an embodiment.

### Best Mode for Carrying Out Invention

Hereinafter, embodiments will be described in detail with reference to the accompanying drawings. The following structural or functional descriptions of embodiments are provided to merely describe the embodiments, and the scope of the embodiments is not limited to the descriptions provided in the disclosure. Various changes and modifications can be made thereto by those of ordinary skill in the art.

As used herein, the singular forms are intended to include the plural forms as well, unless the context clearly indicates otherwise. It should be further understood that the terms "comprises," "comprising," "includes," and/or "including," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined herein, all terms used herein including technical or scientific terms have the same meanings as those generally understood by one of ordinary skill in the art. Terms defined in dictionaries generally used should be construed to have meanings matching with contextual meanings in the related art and are not to be construed as an ideal or excessively formal meaning unless otherwise defined herein.

Also, in the description of embodiments, detailed description of structures or functions that are thereby known after an understanding of the disclosure of the present application will be omitted when it is deemed that such description will cause ambiguous interpretation of the embodiments.

Although terms such as "first," "second," and "third", or A, B, (a), (b), and the like may be used herein to describe various components, the components are not limited to the terms. These terms should be used only to distinguish one component from another component. It will be understood that when a component is referred to as being "connected to," "coupled to," or "joined to" another component, the component can be directly connected or coupled to the other component or intervening components may be present.

Components having the same functions as those of components included in one embodiment will be described using the same names in other embodiments. Unless stated to the contrary, the description given in one embodiment may be applied to the other embodiments, and detailed descriptions thereof will be omitted.

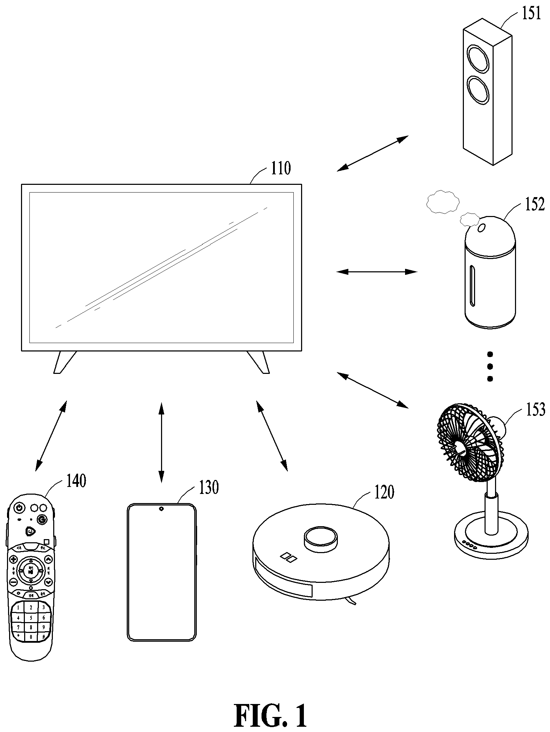

Hereinafter, according to embodiments of the present disclosure, a device and method for providing a user interface (UI) for controlling registered external devices will be described with reference to FIGS. 1 through 8.

FIG. 1 is a diagram schematically illustrating a configuration of a system for providing a UI for controlling registered external devices according to an embodiment.

Referring to FIG. 1, a system of the present disclosure may include an electronic device 110 and a mobile electronic device 120. In this case, as shown in FIG. 1, an example of the electronic device 110 may be a television (TV), and an example of the mobile electronic device 120 may be a robot vacuum cleaner.

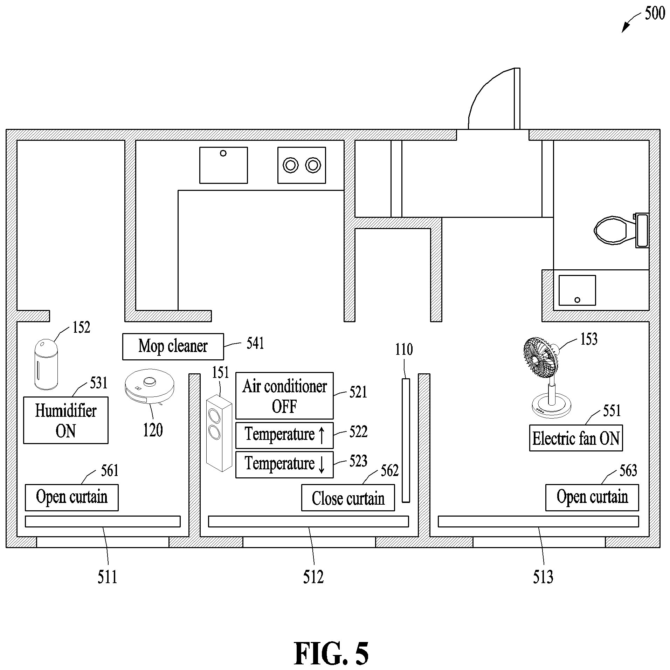

The electronic device 110 may scan external devices connectable through wireless communication; receive a topographic map generated by the mobile electronic device 120 through scanning while moving and information about scanned external device; match the external devices scanned by the mobile electronic device 120 and the external devices connectable through the wireless communication; register successfully matched external devices 151, 152, and 153; output, on a screen, a list of the registered external devices 151, 152, and 153 and a UI for controlling each of the registered external devices 151, 152, and 153; and when a control command is selected through the UI, transmit the selected control command to a registered external device corresponding to the selected control command. In this case, examples of the UI will be described below with reference to FIGS. 5 to 7.

In addition, the electronic device 110 may transmit the list of the registered external devices and the UI controlling each of the registered external devices to a mobile terminal 130 through the screen.

The electronic device 110 may receive the selection of the control command made through the UI from the mobile terminal 130 or a remote-control terminal 140.

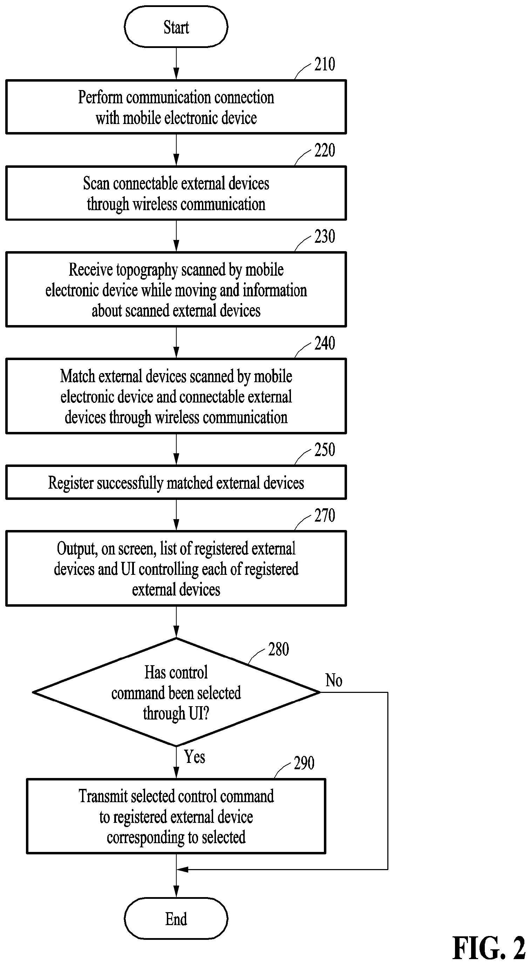

An operation performed by the electronic device 110 to register the external devices 151, 152, and 153, and output and control the list of the registered external devices 151, 152, and 153, and the UI for controlling each of the registered external devices 151, 152, and 153 on the screen will be described in more detail below with reference to FIGS. 2 to 8.

FIG. 2 is a flowchart illustrating an example of a process performed by an electronic device to register external devices and output and control a UI for controlling the registered external devices, using a mobile electronic device, according to an embodiment.

Referring to FIG. 2, in operation 210, the electronic device 110 may perform a communication connection with the mobile electronic device 120.

In this case, the communication connection with the mobile electronic device 120 may be communication using Bluetooth, Wi-Fi communication through an access point, or various other communication methods.

In operation 220, the electronic device 110 may scan external devices connectable through wireless communication. The connectable external devices scanned by the electronic device 110 in operation 220 may include, for example, home appliances such as an air conditioner, a refrigerator, an electric fan, a humidifier, and a curtain opener/closer, and a method for the wireless communication may use a communication connection such as Wi-Fi, Bluetooth, and infrared communication. However, examples are not limited to the home appliances described above, and the communication method is not limited to the example communication methods described above.

In operation 230, the electronic device 110 may receive a topographical map generated by the mobile electronic device 120 through scanning while moving and information about scanned external devices. In this case, the topographic map generated by the mobile electronic device 120 through scanning while moving may be a floor plan of a house.

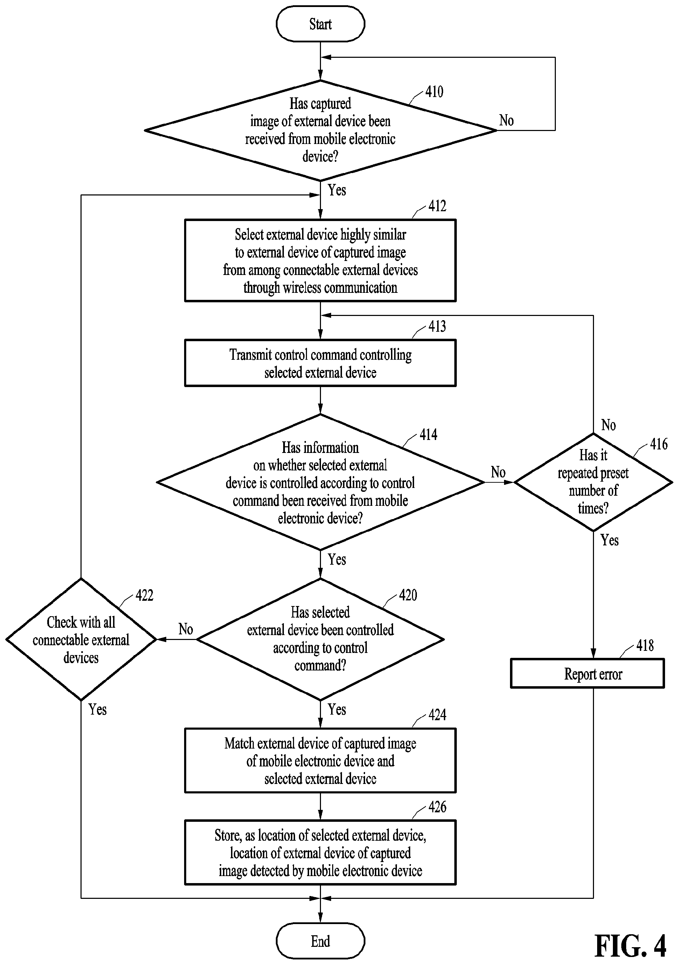

In operation 240, the electronic device 110 may match the external devices scanned by the mobile electronic device 120 and the external device connectable through the wireless communication. Operation 240 will be described in more detail below with reference to FIG. 4.

In operation 250, the electronic device 110 may register successfully matched external devices as devices to be controlled.

In this case, the electronic device 110 may request a user to make an input through a screen such that the user is to select a control command to be provided through a UI for the registered external devices.

In operation 270, the electronic device 110 may output, on the screen, a list of the registered external devices and a UI for controlling each of the registered external devices.

In operation 270, the electronic device 110 may display and output a location of each of the registered external devices on the topographic map generated by the mobile electronic device 120 through scanning, and output the UI corresponding to each of the displayed external devices around each of the displayed external devices. In this case, an area around an electronic device where the UI is output may be an empty space on the topographic map.

In addition, the electronic device 110 may also output a current state of each of the registered external devices in operation 270. For example, information on whether a registered external device is turned off or on, and when the registered external device is on, a mode in which the registered external device operates may be displayed together.

The UI for controlling each of the registered external devices, which is output in operation 270, may display a control command selected by the user from among control commands of the registered external devices.

The UI for controlling each of the registered external devices, which is output in operation 270, may display a preset control command as the most frequently used control command among the control commands of the registered external devices.

The electronic device 110 may also transmit the list of the registered external devices and the UI for controlling each of the registered external devices to the mobile terminal 130 through the screen, in operation 270.

Examples of the screen output in operation 270 will be described below with reference to FIGS. 5 to 7.

FIG. 5 is a diagram illustrating an example of a screen outputting a UI on an electronic device according to an embodiment.

Referring to FIG. 5, the electronic device 110 may display and output, on a topographic map 500 generated by the mobile electronic device 120 through scanning, locations of registered external devices such as an air conditioner 151, a humidifier 152, an electric fan 153, curtain opener/closers 511, 512, and 513, and a robot cleaner that is the mobile electronic device 120.

In addition, the electronic device 110 may output UIs 521, 522, 523, 531, 541, 551, 561, 562, and 563 corresponding to the displayed external devices 120, 151, 152, 153, 511, 512, and 513 around them.

For example, for the curtain opener/closers 511, 512, and 513, the electronic device 110 may output the UIs 561, 562, and 563 for opening or closing curtains.

Although one UI may be output for each displayed external device, a plurality of UIs may also be output. For the air conditioner 151, the UIs 521, 522, and 523 for turning off, raising the temperature, and lowering the temperature may be output.

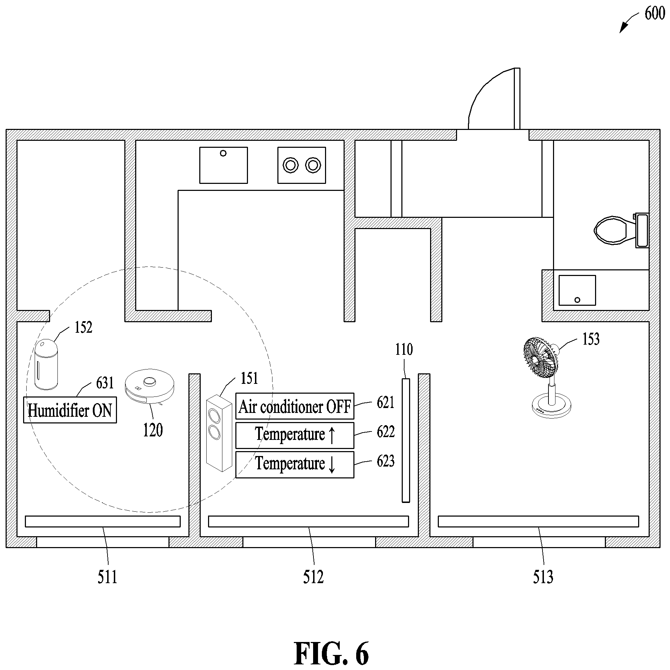

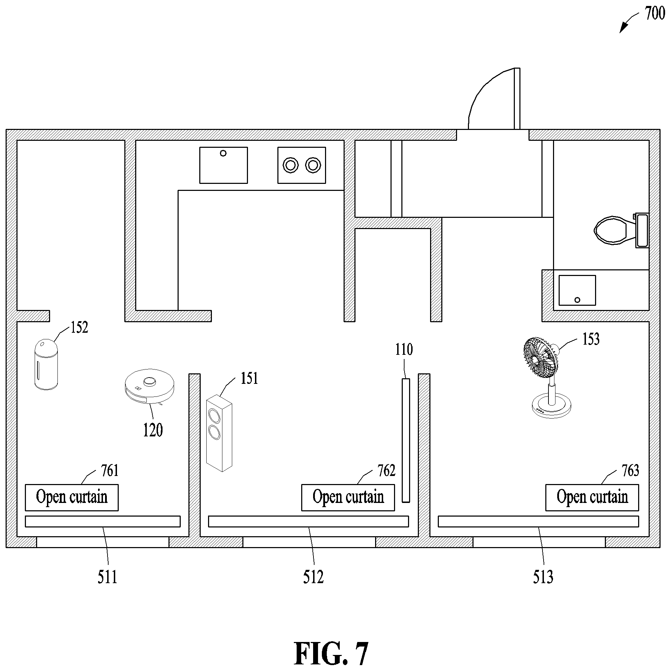

Although the electronic device 110 outputs the UIs 521, 522, 523, 531, 541, 551, 561, 562, and 563 around corresponding external devices, for example, the external devices 120, 151, 152, 153, 511, 512, and 513 shown in FIG. 5, it may provide a UI only to an external device around the mobile electronic device 120 shown in FIG. 6 or provide a UI highly likely to be performed by the user according to learning as shown in FIG. 7.

FIG. 6 is a diagram illustrating another example of a screen outputting a UI on an electronic device according to an embodiment.

Referring to FIG. 6, the electronic device 110 may display and output, on a topographic map 600 generated by the mobile electronic device 120 through scanning, locations of registered external devices such as an air conditioner 151, a humidifier 152, an electric fan 153, curtain opener/closers 511, 512, and 513, and a robot cleaner that is the mobile electronic device 120.

In addition, the electronic device 110 may output UIs 621, 622, 623, and 631 corresponding to the air conditioner 151 and the humidifier 152, which are external devices to be controlled by the robot cleaner 120 at a location of the robot cleaner 120, around the corresponding external devices.

FIG. 7 is a diagram illustrating still another example of a screen outputting a UI on an electronic device according to an embodiment.

Referring to FIG. 7, the electronic device 110 may display and output, on a topographic map 700 generated by the mobile electronic device 120 through scanning, locations of registered external devices such as an air conditioner 151, a humidifier 152, an electric fan 153, curtain opener/closers 511, 512, and 513, and a robot cleaner that is the mobile electronic device 120.

In addition, the electronic device 110 may output an operation that is highly likely to be performed by the user at a current time as a result of checking through learning, on a UI around a corresponding external device among the displayed external devices 120, 151, 152, 153, 511, 512, and 513. In this case, it may calculate, as a value, a probability that the user allows the operation to be performed at the current time, and when the value exceeds a threshold, may determine to output it on the UI.

For example, when an operation or action performed by the user to open curtains after waking up at eight in the morning is learned, the electronic device 110 may output UIs761, 762, and 763 for opening the curtains around the curtain opener/closers 511, 512, and 513 displayed on the topographic map 700 at eight in the morning.

Referring again to FIG. 2, when a control command is selected through the UI in operation 280, the electronic device 110 may transmit the selected control command to a registered external device corresponding to the selected control command in operation 290.

In this case, the electronic device 110 may transmit the selected control command directly to the registered external device corresponding to the selected control command, or transmit the selected control command to the registered external device corresponding to the selected control command through the mobile electronic device 120. That is, when the control command transmitted from the electronic device 110 is not transmitted to the registered external device, the electronic device 110 may move the mobile electronic device 120 to a location of the registered external device to transmit the control command thereto.

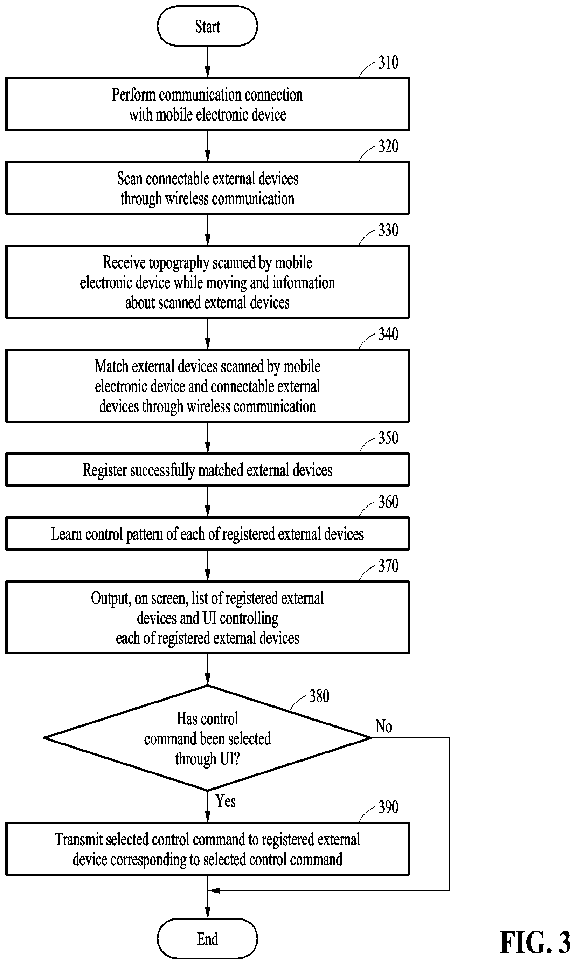

FIG. 3 is a flowchart illustrating another example of a process performed by an electronic device to register external devices and output and control a UI for controlling the registered external devices, using a mobile electronic device, according to an embodiment.

Referring to FIG. 3, in operation 310, the electronic device 110 may perform a communication connection with the mobile electronic device 120.

In this case, the communication connection with the mobile electronic device 120 may be communication using Bluetooth, Wi-Fi communication through an access point, or various other communication methods.

In operation 320, the electronic device 110 may scan external devices connectable through wireless communication. The connectable external devices scanned by the electronic device 110 in operation 320 may be, for example, home appliances such as an air conditioner, a refrigerator, an electric fan, a humidifier, and a curtain opener/closer, and the used wireless communication method may be Wi-Fi, Bluetooth, and infrared communication. However, the home appliances are not limited to the foregoing examples, and the communication method is not limited to the foregoing examples.

In operation 330, the electronic device 110 may receive a topographic map generated by the mobile electronic device 120 through scanning while moving and information about scanned external devices. In this case, the topographic map generated by the mobile electronic device 120 through scanning while moving may be a floor plan of a house.

In operation 340, the electronic device 110 may match the external devices scanned by the mobile electronic device 120 and the external devices connectable through the wireless communication. Operation 340 will be described in more detail below with reference to FIG. 4.

In operation 350, the electronic device 110 may register successfully matched external devices as devices to be controlled.

In operation 360, the electronic device 110 may learn a control pattern of each of the registered external devices. In this case, the control pattern may indicate when and under what circumstances a registered external device performs what operation. For example, when the user repeats, a preset number of times or more, an action of opening electric curtains at a certain time (e.g., wake-up time in the morning), an action of turning on a humidifier when the humidity is 30% or below, or an action of turning on an air conditioner when the temperature exceeds 28°C, a control pattern may be generated. In addition, learning may be performed to determine which action or operation is highly likely to be performed at a current time using the control pattern.

In operation 370, the electronic device 110 may output, on a screen, a list of the registered external devices and a UI for controlling each of the registered external devices.

In operation 370, the electronic device 110 may display and output a location of each of the registered external devices on the topographic map generated by the mobile electronic device 120 through scanning and may output a UI corresponding to each of the displayed external devices around each of the displayed external devices.

The electronic device 110 may also output a current state of each of the registered external devices, in operation 370. For example, whether a registered external device is turned off or on, and if it is on, what mode it is operating in may be displayed together.

The UI for controlling each of the registered external devices output in operation 370 may display a control command selected by the user from among control commands of the registered external device.

The UI for controlling each of the registered external devices output in operation 370 may display a control command that is preset as the most frequently used control command among the control commands of the registered external devices.

In addition, the electronic device 110 may transmit the list of the registered external devices and the UI for controlling each of the registered external devices to the mobile terminal 130, in operation 370.

For example, when a registered external device is an air conditioner and the electronic device 110 learns in operation 360 that the user performs, a preset or more number of times, a control pattern of turning on the air conditioner when the temperature exceeds 30°C, the electronic device 110 may display a UI indicating "Air conditioner ON" around the air conditioner output on the screen when the current temperature is 30°C or higher, when outputting the list of the registered external devices and the UI for controlling each of the registered external devices, in operation 370.

For another example, when a registered external device is a humidifier and the electronic device 110 learns in operation 360 that the user performs, a preset or more number of times, a control pattern of turning on the humidifier when the humidity is 30% or less, the electronic device 110 may display a UI indicating "Humidifier ON" around the humidifier output on the screen when the current humidity is less than 30%, when outputting the list of the registered external devices and the screen of the UI for controlling each of the registered external devices, in operation 370.

In operation 390, when the control command is selected through the UI in operation 380, the electronic device 110 may transmit the selected control command to a registered external device corresponding to the selected control command.

In this case, the electronic device 110 may transmit the selected control command directly to the registered external device corresponding to the selected control command, but transmit the selected control command to the registered external device corresponding to the selected control command through the mobile electronic device 120. That is, when the control command transmitted from the electronic device 110 is not transmitted to the registered external device, the electronic device 110 may move the mobile electronic device 120 to a location of the registered external device to transmit the control command thereto.

FIG. 4 is a flowchart illustrating an example of a process performed by an electronic device to match external devices connectable through wireless communication and external devices scanned by a mobile electronic device, according to an embodiment.

Referring to FIG. 4, when receiving a captured image of an external device from the mobile electronic device 120 in operation 410, the electronic device 110 may select an external device that has a high similarity to the external device of the captured image from among external devices connectable through wireless communication in operation 412. In operation 412, the electronic device 110 may analyze the captured image of the external device to determine what the external device of the captured image is and may select an external device of the most similar category from among the external devices connectable through the wireless communication. In this case, selecting the external device with the high similarity in operation 412 may indicate that the electronic device 110 calculates the similarity and selects the external device with the highest similarity value.

In operation 413, the electronic device 110 may transmit a control command for controlling the selected external device. In this case, the transmitted control command may be a command that makes it easy to check whether the selected external device operates. An example of the control command to be transmitted may be power ON.

In operation 414, the electronic device 110 may check whether it receives, from the mobile electronic device 120, information indicating whether the selected external device is controlled according to the control command.

In this case, a method of checking whether the selected external device is controlled through the mobile electronic device 120 may include checking whether the selected external device is controlled by detecting a change in the captured external device before and after the control command is transmitted through a camera of the mobile electronic device 120, or checking whether the selected external device is controlled by detecting noise generated before and after the control command is transmitted through a microphone of the mobile electronic device 120. When whether the selected external device is controlled is checked, the mobile electronic device 120 may transmit a result of the checking to the electronic device 110.

Alternatively, the mobile electronic device 120 may transmit, to the electronic device 110, images of the external device captured before and after the control command is transmitted through the camera of the mobile electronic device 120, or transmit, to the electronic device 110, by detecting noise generated before and after the control command is transmitted through the microphone of the mobile electronic device 120. The electronic device 110 receiving these may check whether the selected external device is controlled using the methods described above.

In operation 416, when the information indicating whether the selected external device is controlled according to the control command is not received from the mobile electronic device 120 as a result of checking in operation 414, the electronic device 110 may check whether the operation of transmitting the control command for controlling the selected external device has been repeated a preset number of times.

When the operation of transmitting the control command for controlling the selected external device has not been repeated the preset number of times as a result of checking in operation 416, the electronic device 110 may return to operation 413.

When the operation of transmitting the control command for controlling the selected external device has been repeated the preset number of times as the result of checking in operation 416, the electronic device 110 may provide a UI allowing the user to directly perform the registration or report an error indicating that the communication connection with the mobile electronic device 120 is not smooth in operation 418.

When the information indicating whether the selected external device is controlled according to the control command is received from the mobile electronic device 120 as the result of operation 414, the electronic device 110 may check whether the selected external device is controlled according to the control command based on the information received from the mobile electronic device 120 in operation 420.

When the selected external device is not controlled according to the control command as a result of checking in operation 420, the electronic device 110 may check whether an attempt has been made to perform the matching on all the connectable external devices in operation 422.

When the attempt has not yet been made to perform the matching on all the connectable external devices as a result of checking in operation 422, the electronic device 110 may return to operation 412 and repeat a series of operations.

When the attempt has been made to perform the matching on all the connectable external devices as the result of checking in operation 422, the electronic device 110 may determine that there is no external device of which an image is captured among the external devices connectable through the wireless communication and end this algorithm. Alternatively, the electronic device 110 may provide a UI allowing the user to manually register the external device from which an image is captured.

When the selected external device is controlled according to the control command as the result of checking in operation 420, the electronic device 110 may match the external device captured by the mobile electronic device 120 to the selected external device in operation 424.

The electronic device 110 may then receive, from the mobile electronic device 120, a location of the captured external device detected by the mobile electronic device 120 and store it as a location of the selected external device in operation 426.

Hereinafter, an electronic device and a mobile electronic device that constitute an operating method described above will be described with reference to the accompanying drawings.

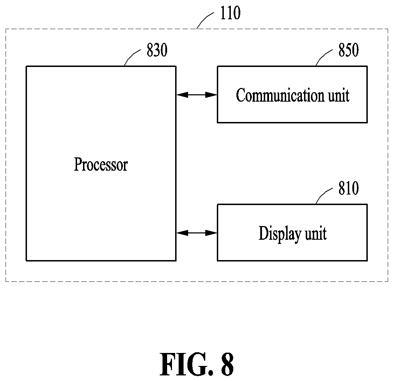

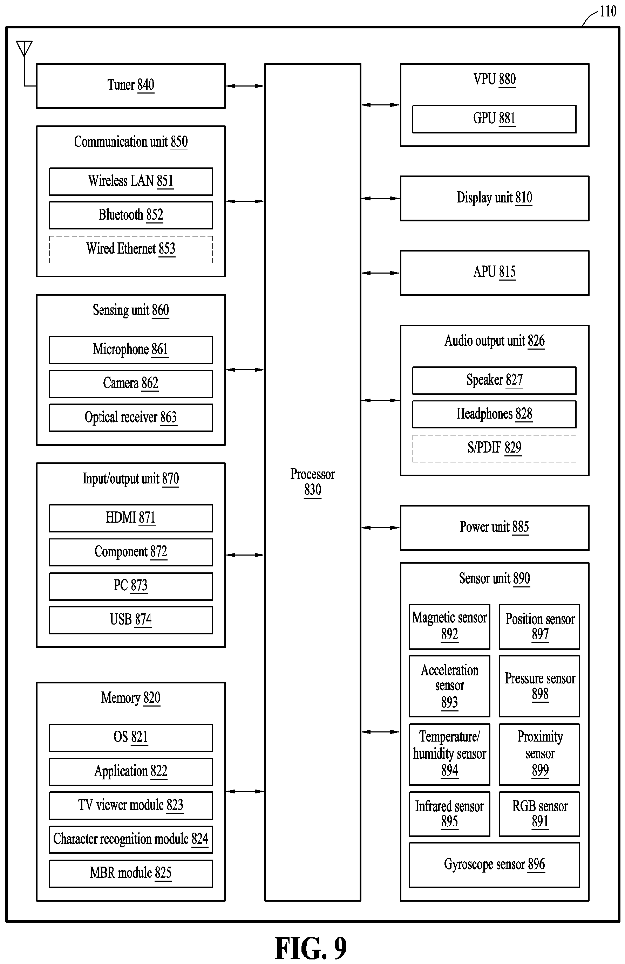

FIG. 8 is a block diagram illustrating a configuration of an electronic device according to an embodiment. FIG. 9 is a detailed block diagram illustrating a configuration of an electronic device according to an embodiment.

As shown in FIG. 8, the electronic device 800 of an embodiment may include a display unit 810, a processor 830, and a communication unit 850. However, not all the illustrated components are essential components, but the electronic device 800 may be implemented with more components than the illustrated components or may be implemented with fewer components than the illustrated components. In this case, the electronic device 800 may be a display device such as a TV

For example, as shown in FIG. 9, the electronic device 800 of an embodiment may include a memory 820, a tuner 840, a sensing unit 860, an input/output unit 870, a video processing unit (VPU) 880, an audio processing unit (APU) 815, an audio output unit 826, a power unit 885, and a sensor unit 890, in addition to the display unit 810, the processor 830, and the communication unit 850.

Hereinafter, the foregoing components will be described in detail.

The communication unit 850 may scan or communicate with external devices connectable through wireless communication and establish communication with the mobile electronic device 120. The display unit 810 may output, on a screen, a list of registered external devices and a UI for controlling each of the registered external devices. The communication unit 850 and the display unit 810 will be described in detail below.

The processor 830 may control the communication unit 850 to perform a communication connection with the mobile electronic device 120 and scan external devices connectable through wireless communication; when receiving a topographical map generated by the mobile electronic device 120 through scanning while moving and information about scanned external devices, match the external devices scanned by the mobile electronic device 120 and the external devices connectable through the wireless communication; register successfully matched external devices; and control the display unit 810 to output a list of the registered external devices and a UI for controlling each of the registered external devices.

When a control command is selected through the UI, the processor 830 may control to transmit the selected control command to a registered external device corresponding to the selected control command.

When transmitting the selected control command to the registered external device corresponding to the selected control command, the processor 830 may control to transmit the selected control command directly to the registered external device corresponding to the selected control command or transmit the selected control command to the registered external device corresponding to the selected control command through the mobile electronic device 120. That is, when the control command transmitted from the electronic device 110 is not transmitted to the registered external device, the processor 830 may move the mobile electronic device 120 to a location of the registered external device to transmit the control command thereto.

When outputting the list of the registered external devices and the UI for controlling each of the registered external devices on the screen, the processor 830 may display and output a location of each of the registered external devices on the topographic map generated by the mobile electronic device 120 through scanning and output a UI corresponding to each of the displayed external devices around each of the displayed external devices.

In addition, when outputting the list of the registered external devices and the UI for controlling each of the registered external devices on the screen, the processor 830 may also output a current state of each of the registered external devices.

The processor 830 may display a control command selected by the user from among control commands for the registered external devices, on the UI for controlling each of the registered external devices.

In addition, the processor 830 may learn a control pattern of each of the registered external devices and may display, on the UI for controlling each of the registered external devices, a control command that is most likely to be currently executed through each of the registered external devices checked through the learning.

In addition, when matching the external devices scanned by the mobile electronic device 120 and the connectable external devices, the processor 830 may, upon receiving a captured image of an external device from the mobile electronic device 120, select an external device having a high similarity to the captured external device from among the external devices connectable through the wireless communication; transmit a control command for controlling the selected external device; upon receiving information on whether the selected external device is controlled according to the control command from the mobile electronic device 120 and checking that the selected external device is controlled according to the control command as a result of checking by the mobile electronic device 120, match the external device captured by the mobile electronic device 120 and the selected external device; and store a location of the captured external device detected by the mobile electronic device 120 as a location of the selected external device.

The processor 830 may determine whether the selected external device is controlled according to the control command by detecting a change in the captured external device before and after the control command is transmitted through the camera of the mobile electronic device 120, or determine whether the selected external device is controlled by detecting noise generated before and after the control command is transmitted through the microphone of the mobile electronic device 120.

The processor 830 may connect to the mobile terminal 130 and control to transmit the list of the registered external devices and the UI for controlling each of the registered external devices to the mobile terminal 130.

The processor 830 may store signals or data input from the outside of the electronic device 110, and may include a random-access memory (RAM) used as a storage area corresponding to various tasks performed in the electronic device 110, a read-only memory (ROM) storing a control program for controlling the electronic device 110, and a processor.

The processor 830 may include a graphics processing unit (GPU) (not shown) for processing graphics corresponding to a video. The processor 830 may be implemented as a system-on-chip (SoC) in which a core (not shown) and a GPU (not shown) are integrated. The processor 830 may include single core, dual core, triple core, quad core, and multiple cores.

The processor 830 may also include a plurality of processors. For example, the processors may include a main processor (not shown) and a sub-processor (not shown) operating in a sleep mode.

According to an embodiment, by executing one or more instructions stored in the memory 820, the processor 830 may detect at least one sensing value corresponding to at least one sensor through the sensor unit 890 including at least one sensor.

In addition, according to an embodiment, by executing one or more instructions stored in the memory 820, the processor 830 may determine that a remote-control device (e.g. a remote controller) touches the electronic device 110 as the at least one detected sensing value is determined to be greater than or equal to a preset threshold.

In addition, according to an embodiment, by executing one or more instructions stored in the memory 820, the processor 830 may compare the detected at least one sensing value and a sensing value of the remote-control device (not shown) received from the remote-control device and determine that the remote-control device touches the electronic device 110.

In addition, according to an embodiment, by executing one or more instructions stored in the memory 820, the processor 830 may request identification information of the remote-control device and receive the identification information of the remote-control device. The processor 830 may also check that the remote-control device is a device already registered in the electronic device 110 based on the identification information of the remote-control device.

In addition, according to an embodiment, by executing one or more instructions stored in the memory 820, the processor 830 may determine a touch area of the remote-control device touching the electronic device 110 based on the at least one sensing value.

In addition, according to an embodiment, by executing one or more instructions stored in the memory 820, the processor 830 may compare the detected at least one sensing value corresponding to the at least one sensor and determine at least one sensor that is determined to be located near a touched point of the remote-control device on the electronic device 110 based on a result of the comparison. The processor 830 may determine the touch area based on the determined at least one sensor.

In addition, according to an embodiment, the processor 830 may receive status information about an operation being executed in the remote-control device from the remote-control device through the communication unit 850.

In addition, according to an embodiment, by executing one or more instructions stored in the memory 820, the processor 830 may perform a preset function corresponding to the determined touch area based on the received status information of the remote-control device.

In addition, according to an embodiment, by executing one or more instructions stored in the memory 820, the processor 830 may determine the number of times that the remote-control device touches the electronic device 110 based on the at least one sensing value.

In addition, according to an embodiment, by executing one or more instructions stored in the memory 820, the processor 830 may perform a preset function corresponding to the number of touches.

In addition, according to an embodiment, by executing one or more instructions stored in the memory 820, the processor 830 may preset a function corresponding to at least one touch area on the electronic device 110 based on a user input.

In addition, by executing one or more instructions stored in the memory 820, the processor 830 may preset a function corresponding to the number of touches on at least one touch area on the electronic device 110 based on a user input.

The memory 820 may store various data, programs, or applications for driving and controlling the electronic device 110 under the control of the processor 830. The memory 820 may store input/output signals or data corresponding to the operations of the VPU 880, the display unit 810, the APU 815, the audio output unit 826, the power unit 830, the tuner 840, the communication unit 850, the sensing unit 860, and the input/output unit 870. The memory 820 may also store a game list, which is a list of games played by the user and includes game title images.

The memory 820 may store objects (e.g., image text, icons, buttons, etc.), user information, documents, databases (DBs), or related data to provide an operating system (OS) 821 for controlling the electronic device 110 and the processor 830, an application 822 initially provided by a manufacturer or downloaded from an external source, a graphical UI (GUI) related to the application, and a GUI.

In addition, the memory 820 may receive an input signal from the remote-control device and perform channel control corresponding to the input signal accordingly. Alternatively, when the input signal corresponds to a preset input, a TV viewer module 823 including one or more instructions for entering a channel scroll UI mode, a character recognition module 824 including one or more instructions for recognizing information from content received from an external device (not shown), and an MBR module 825 including one or more instructions for channel control from an external device (not shown) may be included.

The memory 820 may include a ROM, a RAM, or a memory card (e.g., micro secure digital (SD) card and universal serial bus (USB) memory (not shown)) mounted on the electronic device 110. The memory 820 may also include a non-volatile memory, a volatile memory, a hard disk drive (HDD), or a solid-state drive (SSD).

According to an embodiment, the memory 820 may include a storage medium of at least one type among a flash memory type, a hard disk type, a multimedia card micro type, a card type (e.g., SD or XD memory, etc.), a RAM, a static RAM (SRAM), a ROM, a programmable ROM (PROM), an electrically erasable PROM (EEPROM), a magnetic memory, a magnetic disk, and an optical disc.

The display unit 810 may display, on the screen, a video included in a broadcast signal received through the tuner 840 under the control of the processor 830. In addition, the display unit 810 may display content (e.g., video) input through the communication unit 850 or the input/output unit 870. The display unit 810 may output images stored in the memory 820 under the control of the processor 830.

The display unit 810 may display, on the screen, a menu screen of the electronic device 110 and a game menu screen of the electronic device 800 (e.g., a game machine) under the control of the processor 830.

The display unit 810 may generate a driving signal by converting image signals, data signals, OSD signals, and control signals processed by the processor 830. The display unit 810 may be implemented as a plasma display panel (PDP), a liquid crystal display (LCD), an organic light-emitting diode (OLED), a cathode ray tube (CRT), a flexible display, and the like. The display unit 810 may also be configured as a touchscreen to be used as an input device in addition to an output device.

The tuner 840 may tune and select only a frequency of a channel desired to be received by the electronic device 110 from among numerous radio wave components by amplifying, mixing, and resonating broadcast signals received by wire or wirelessly. The broadcast signals may include audio, video, and additional information (e.g., electronic program guide (EPG)).

The tuner 840 may receive a broadcast signal in a frequency band corresponding to a channel number according to a user input (e.g., a control signal received from the remote-control device (not shown), e.g., a channel number input, a channel up-down input, and a channel input from an EPG screen).

The tuner 840 may receive broadcast signals from various sources, such as, terrestrial broadcasting, cable broadcasting, satellite broadcasting, and Internet broadcasting. The tuner 840 may also receive broadcast signals from sources, such as, analog broadcasting or digital broadcasting. The broadcast signals received through the tuner 840 may be decoded (e.g., through audio decoding, video decoding, or additional information decoding) and separated into audio, video, and/or additional information. The separated audio, video, and/or additional information may be stored in the memory 820 under the control of the processor 830.

The tuner 840 of the electronic device 110 may be one or multiple. The tuner 840 may be implemented as an all-in-one unit with the electronic device 110 or may be implemented as a separate device (e.g., a set-top box (not shown) and a tuner unit (not shown) connected to the input/output unit 870) having a tuner unit electrically connected to the electronic device 110.

The communication unit 850 may connect the electronic device 110 to an external device (e.g., an audio device, etc.) (not shown) under the control of the processor 830. The processor 830 may transmit/receive content to/from an external device (not shown) connected through the communication unit 850, download an application from an external device (not shown), or perform web browsing. The communication unit 850 may include one of wireless local area network (LAN) 851, Bluetooth 852, and wired Ethernet 853, according to the performance and structure of the electronic device 110. The communication unit 850 may also include a combination of wireless LAN 851, Bluetooth 852, and wired Ethernet 853.

In addition, when searching the mobile electronic device 120 and the external devices 151, 152, and 153 and performing a communication connection through identification information and preset passwords of the mobile electronic device 120 and the external devices 151, 152, and 153, the communication unit 850 may establish communication using a communication method selected from among communication methods included in the communication unit 850 under the control of the processor 830. That is, the communication method by which the communication unit 850 connects to the mobile electronic device 120 and the external devices 151, 152, and 153 may be one of Wi-Fi, Bluetooth, Bluetooth low energy (BLE) (not shown), and ZigBee (not shown), for example,

In addition, the communication unit 850 may further include other short-range communication methods (e.g., near-field communication (NFC) (not shown), BLE (not shown), ZigBee, infrared communication, etc.) in addition to Bluetooth.

The sensing unit 860 may sense voices, images, or interactions of the user and may include a microphone 861, a camera 862, and an optical receiver 863.

The microphone 861 may receive a voice uttered by the user. The microphone 861 may convert the received voice into an electrical signal and output it to the processor 830. The voice of the user may include, for example, a voice corresponding to a menu or function of the electronic device 110.

According to an embodiment, the processor 830 may not only receive an utterance of the user through the microphone 861 embedded in the electronic device 110, but also receive data corresponding to the utterance through a remote-control device (e.g., a remote controller). For example, the utterance of the user may be received by a microphone installed in the remote-control device, and a signal corresponding to the utterance of the user may be transmitted from the remote-control device to the electronic device 110.

According to another embodiment, an application (or app) and/or program for receiving an utterance of the user or controlling the electronic device 110 may be installed in an external electronic device. In addition, the processor 830 may receive data corresponding to the utterance of the user through the external electronic device (e.g., an artificial intelligence (AI) speaker).

The camera 862 may obtain an image bezel such as a still image or a video. An image captured through such an image sensor may be processed through the processor 830 or a separate image processing unit (not shown).

The image bezel processed by the camera 862 may be stored in the memory 820 or transmitted externally through the communication unit 850. The camera 862 may be provided as two or more cameras according to the configuration of the electronic device 110.

The optical receiver 863 may receive an optical signal (including a control signal) from an external remote-control device. The optical receiver 863 may receive an optical signal corresponding to a user input (e.g., touch, press, touch gesture, voice, or motion) from the remote-control device. The control signal may be extracted from the received optical signal under the control of the processor 830. For example, the optical receiver 863 may receive a control signal corresponding to a channel up/down button for channel switching from the remote-control device.

The input/output unit 870 may receive a video (e.g., a moving image, etc.), audio (e.g., voice, music, etc.), and additional information (e.g., EPG, etc.) from the outside of the electronic device 110 under the control of the processor 830. The input/output unit 870 may include at least one of a high-definition multimedia interface (HDMI) port 871, a component jack 872, a personal computer (PC) port 873, or a universal serial bus (USB) port 874. The input/output unit 870 may include a combination of at least one of the HDMI port 871, the component jack 872, the PC port 873, and the USB port 874. An external image providing device (not shown) or the electronic device 800 (e.g., a game machine) may be connected through the HDMI port 871. However, a port of the input/output unit 870 may be implemented as various ports. For example, the HDMI port 871 may be a port that may transmit video/audio signals simultaneously, but the input/output unit 870 may include a port that may separately input/output video signals and audio signals instead of the HDMI port 871. For another example, the electronic device 110 may transmit video/audio signals to an external device (not shown) other than the display unit 810, and the input/output unit 870 may include various interfaces to transmit and receive signals to and from an external device in a wired/wireless manner.

The VPU 880 may perform processing on video data received by the electronic device 110. The VPU 880 may perform, on the video data, various image processing methods such as decoding, scaling, noise filtering, bezel rate conversion, and resolution conversion.

The GPU 881 may generate a screen including various objects such as icons, images, text, and the like using a calculation unit (not shown) and a rendering unit (not shown). The calculation unit (not shown) may calculate attribute values such as coordinates, shape, size, color, and the like for each object to be displayed according to a layout of the screen, using a user input sensed through the sensing unit 860. The rendering unit (not shown) may generate screens with various layouts including objects based on the attribute values calculated by the calculation unit (not shown). A screen generated by the rendering unit (not shown) may be displayed on a display area of the display unit 810.

The APU 815 may perform processing on audio data. The APU 815 may perform various processing methods such as decoding, amplification, noise filtering, and the like on the audio data. In addition, the APU 815 may include a plurality of audio processing modules to process audio corresponding to a plurality of contents.

The audio output unit 826 may output audio included in a broadcast signal received through the tuner 840 under the control of the processor 830. The audio output unit 826 may output audio (e.g., voice, sound, etc.) input through the communication unit 850 or the input/output unit 870. In addition, the audio output unit 826 may output audio stored in the memory 820 under the control of the processor 830. The audio output unit 826 may include at least one of a speaker 827, a headphone output terminal 828, or a Sony/Philips digital interface (S/PDIF) output terminal 829. The audio output unit 826 may include a combination of at least one of the speaker 827, the headphone output terminal 828, and the S/PDIF output terminal 829.

The power unit 885 may supply power input from an external power source to internal components in the electronic device 110 under the control of the processor 830. In addition, the power unit 885 may supply power output from one or more batteries (not shown) located inside the electronic device 110 to the internal components under the control of the processor 830.

The sensor unit 890 may sense a state of the electronic device 110 or a state around the electronic device 110 and transmit the sensed information to the processor 830.

The sensor unit 890 may include at least one of a magnetic sensor 892, an acceleration sensor 893, a temperature/humidity sensor 894, an infrared sensor 895, a gyroscope sensor 896, a position sensor 897 (e.g., a global positioning system (GPU)), an air pressure sensor 898, a proximity sensor 899, and a red, green, blue (RGB) sensor (e.g., an illuminance sensor) 891, but is not limited thereto. In this case, the functions of each sensor may be intuitively inferred by a person skilled in the art from its name, and thus detailed descriptions thereof will be omitted.

According to an embodiment, the sensor unit 890 may sense an external impact applied to the electronic device 110. For example, as the remote-control device touches the electronic device 110, the sensor unit 890 of the electronic device 110 may output a sensing value.

In addition, the electronic device 110 including the display unit 810 may be electrically connected to a separate external device (e.g., a set-top box (not shown)) including the tuner 840.

In addition, the electronic device 110 may be implemented as an analog TV, a digital TV, a three-dimensional (3D) TV, a smart TV, an LED TV, an OLED TV, a plasma TV, a monitor, and the like, but is not limited thereto, which may be easily understood by those who have ordinary skill in the art.

The illustrated block diagram of the electronic device 110 is provided as an example block diagram for one embodiment. The components in the block diagram may be integrated, added, or omitted according to the specifications of an actual implementation of the electronic device 110. That is, as needed, two or more components may be combined into one component, or one component may be subdivided into two or more components. In addition, the functions performed by each block are described as examples, and the specific operations or devices do not limit the scope of the present disclosure.

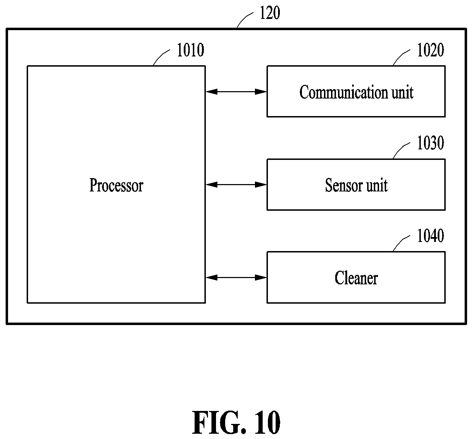

FIG. 10 is a block diagram illustrating a configuration of a mobile electronic device according to an embodiment.

Referring to FIG. 10, the mobile electronic device 120 may include a processor 1010, a communication unit 1020, a sensor unit 1030, and a cleaner 1040.

The communication unit 1020 may connect the mobile electronic device 120 to the electronic device 110 under the control of the processor 1010 or connect the mobile electronic device 120 to the electronic device 110 through an access point.

The communication unit 1020 may communicate with the electronic device 110 through wireless LAN, Bluetooth, NFC, BLE (not shown), Zigbee communication, infrared communication, and the like, and may transmit a control command received from the electronic device 110 to a registered external device. For example, the communication unit 1020 may transmit a control command received from the electronic device 110 to a registered external device through infrared communication.

The sensor unit 1030 may sense objects or obstacles located on a travel path of the mobile electronic device 120 from the front or side. The sensor unit 1030 may also scan external devices (or home appliances) located on the travel path and scan a topography thereof.

The sensor unit 1030 may include various sensors of various types, and the sensors may include, for example, a motion sensor, an image sensor, an infrared sensor, a radio wave sensor, a 3D detection sensor, an audio sensor, and the like. The motion sensor may recognize a motion of a moving obstacle and obtain a 3D shape of the obstacle, and the image sensor may also obtain the shape of the obstacle. The infrared sensor or the radio wave sensor may transmit infrared rays or radio waves to an object to measure a distance to the obstacle. When a plurality of sensors is provided, it may sense two-dimensional (2D) and 3D shapes and locations of obstacles in addition to one-dimensional (1D) distances. The 3D detection sensor may also recognize a distance to an obstacle and a 3D shape of the obstacle. When a plurality of sensors configured to recognize 1D distances and shapes is provided, it may sense 2D and 3D shapes. Thus, 2D and 3D obstacles may be detected according to the type and number of sensors.

The cleaner 1040 may include a driving device including a multi-directional moving wheel that allows a main body of the mobile electronic device 120 to travel in a cleaning area, a brush unit that collects dust, and a collector that collects air including foreign matters such as dust collected by the brush unit, and may perform cleaning under the control of the processor 1010.

The processor 1010 may establish wireless communication with the electronic device 110, scan external devices (or home appliances) located on a movement path to provide information about the scanned external devices to the electronic device 110, and scan a topography therearound to provide it to the electronic device 110.

The processor 1010 may capture an image of a scanned external device to provide it to the electronic device 110. When a control command is received from the electronic device 110, the processor 1010 may transmit the received control command to the scanned external device, and may check whether the selected external device is controlled by detecting a change in the captured external device before and after the control command is transmitted through an image sensor such as a camera, or check whether the selected external device is controlled by detecting noise generated before and after the control command is transmitted through an audio sensor such as a microphone. The processor 1010 may then control to transmit, to the electronic device 110, information on whether the selected external device is controlled.

Alternatively, the processor 1010 may capture an image of a scanned external device to provide it to the electronic device 110. When receiving a control command from the electronic device 110, the processor 1010 may control to transmit the received control command to the scanned external device, and transmit images of the external device captured before and after the control command is transmitted through the image sensor such as the camera to the electronic device 110, or detect noise generated before and after the control command is transmitted through the audio sensor such as the microphone and transmit information on the sensed noise to the electronic device 110.

When receiving, from the electronic device 110, a request for transmitting a control command provided at a specific location or for transmitting a control command provided by moving to a specific external device, the processor 1010 may transmit the control command provided at the location or a location obtained by the moving from which the specific electronic device is to be controlled.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter. The above-described hardware devices may be configured to act as one or more software modules in order to perform the operations of the above-described examples, or vice versa.

The software may include a computer program, a piece of code, an instruction, or some combination thereof, to independently or collectively instruct or configure the processing device to operate as desired. The software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

## Claims

1. A method of providing a user interface (UI) to control registered external devices by an electronic device, the method comprising:
performing a communication connection with a mobile electronic device;
scanning for external devices connectable through wireless communication;
receiving a topographical map generated by the mobile electronic device through scanning while moving and information about scanned external devices;
matching the external devices scanned by the mobile electronic device and the external devices connectable through the wireless communication;
registering matched external devices for which the matching is successful; and
outputting a list of the registered external devices and a UI to control the registered external devices, respectively, on a screen.

2. The method of claim 1, further comprising:
when a control command is selected through the UI, transmitting the selected control command to a registered external device corresponding to the selected control command.

3. The method of claim 2, wherein the transmitting of the selected control command to the registered external device corresponding to the selected control command comprises:
transmitting the selected control command directly to the registered external device corresponding to the selected control command or transmitting the selected control command to the registered external device corresponding to the selected control command through the mobile electronic device.

4. The method of claim 1, wherein the outputting of the list of the registered external devices and the UI for controlling each of the registered external devices on the screen comprises:
displaying and outputting a location of each of the registered external devices on the topographic map, and outputting the UI corresponding to each of the displayed external devices around each of the displayed external devices.

5. The method of claim 1, wherein the outputting of the list of the registered external devices and the UI to control the registered external devices, respectively, on the screen comprises:
displaying and outputting a location of each of the registered external devices on the topographic map, and outputting the UI around each external device corresponding to an external device that is controllable by the mobile electronic device at a location of the mobile electronic device.

6. The method of claim 1, wherein the outputting of the list of the registered external devices and the UI for controlling each of the registered external devices on the screen comprises:
outputting together with a current state of each of the registered external devices.

7. The method of claim 1, wherein the UI to control the registered external devices is configured to:
display a control command selected by a user from among control commands for the registered external devices.

8. The method of claim 1, further comprising:
learning a control pattern of each of the registered external devices,
wherein the UI to control the registered external devices is configured to:
display a control command having a highest probability of currently being executed through each of the registered external devices which is checked through the learning.

9. The method of claim 1, further comprising:
learning a control pattern of each of the registered external devices,
wherein the outputting of the list of the registered external devices and the UI to control the registered external devices, respectively, on the screen comprises:
displaying and outputting a location of each of the registered external devices on the topographic map, and outputting an operation of an external device whose probability of being currently performed at a current point in time as a result of the learning exceeds a preset reference value to the UI around the external device.

10. The method of claim 1, wherein the matching of the external devices scanned by the mobile electronic device and the connectable external devices comprises:
when receiving a captured image of an external device from the mobile electronic device, selecting an external device having a high similarity to the external device of the image from among the external devices connectable through the wireless communication;
transmitting a control command to control the selected external device;
receiving, from the mobile electronic device, information on whether the selected external device is controlled according to the control command; and
when, as a result of checking by the mobile electronic device, the selected external device is controlled according to the control command, matching the selected external device to the external device of the image captured by the mobile electronic device, and storing a location of the external device of the captured image that is detected by the mobile electronic device as a location of the selected external device.

11. The method of claim 10, wherein the receiving from the mobile electronic device the information on whether the selected external device is controlled according to the control command comprises:
checking whether the selected external device is controlled by detecting a change in the external device of the captured image before and after the control command is transmitted through a camera of the mobile electronic device; or
checking whether the selected external device is controlled by detecting noise generated before and after the control command is transmitted through a microphone of the mobile electronic device.

12. The method of claim 1, further comprising:
connecting to a mobile terminal,
wherein the outputting of the list of the registered external devices and the UI to control the registered external devices, respectively, on the screen comprises:
transmitting, to the mobile terminal, the list of the registered external devices and the UI to control the registered external devices.

13. An electronic device, comprising:
a communication unit configured to scan or communicate with external devices connectable through wireless communication and establish communication with a mobile electronic device;
a display unit configured to output, on a screen, a list of registered external devices and a user interface (UI) to control each of the registered external devices, respectively; and
a processor configured to: control the communication unit to perform a communication connection with the mobile electronic device and scan the external devices connectable through the wireless communication; when receiving a topographic map generated by the mobile electronic device through scanning while moving and information about scanned external devices, match the external devices scanned by the mobile electronic device and the external devices connectable through the wireless communication; register matched external devices for which the matching is successful; and control the display unit to output a list of the registered external devices and a UI to control the registered external devices, respectively.

14. The electronic device of claim 13, wherein the processor is configured to:
when a control command is selected through the UI, control to transmit the selected control command to a registered external device corresponding to the selected control command.

15. The electronic device of claim 14, wherein the processor is configured to:
when controlling to transmit the selected control command to the registered external device corresponding to the selected control command,
control to transmit the selected control command directly to the registered external device corresponding to the selected control command or transmit the selected control command to the registered external device corresponding to the selected control command through the mobile electronic device.
